# EUROPÄISCHE PATENTANMELDUNG

(11) **EP 4 556 859 A1**
(43) Veröffentlichungstag der Anmeldung: **21.05.2025**
(21) Anmeldenummer: 24210866.0
(22) Anmeldetag: 05.11.2024
(51) Int. Cl.: G01D 4/00

(54) **VERFAHREN UND VORRICHTUNG ZUM DARSTELLEN EINES ENERGIEVERBRAUCHS EINES KLEINGERÄTS, KLEINGERÄT UND TRANSMITTERVORRICHTUNG**

(30) Priorität: 15.11.2023 DE 102023131864
(71) Anmelder: Miele & Cie. KG, 33332 Gütersloh (DE)
(72) Erfinder: Wilkens, Henrik, 49080 Osnabrück (DE); Ennen, Volker, Dr., 32257 Bünde (DE); Auell, Alexander, 33613 Bielefeld (DE); Hormann, Michael, 33332 Gütersloh (DE); Weber-Lehn, Christian, 49080 Osnabrück (DE)

(57) **Zusammenfassung**

Ein Verfahren zum Darstellen eines Energieverbrauchs eines unter Verwendung einer Transmittervorrichtung (100) drahtlos mit Energie versorgbaren Kleingeräts (102) umfasst ein Einlesen eines Verbrauchsignals, das einen Anforderungswert für eine von dem Kleingerät (102) für einen Nutzungsvorgang prognostizierte Energie und/oder einen von einer Messeinrichtung (134) der Transmittervorrichtung (100) gemessenen Übertragungswert für eine während des Nutzungsvorgangs an das Kleingerät (102) übertragenen Energie repräsentiert, sowie ein Bereitstellen eines Anzeigesignals an eine Schnittstelle zu einer Anzeigeeinrichtung (124, 132) unter Verwendung des Verbrauchsignals, um einem Nutzer einen Energieverbrauch des Kleingeräts (102) für den Nutzungsvorgang darzustellen.

## Beschreibung

Die Erfindung betrifft ein Verfahren und eine Vorrichtung zum Darstellen eines Energieverbrauchs eines Kleingeräts, ein Kleingerät und eine Transmittervorrichtung, insbesondere ein Kochfeld.

Es ist inzwischen bei vielen Haushaltsgeräten üblich, dass dem Nutzer nach einem Nutzungsvorgang der Energieverbrauch und ähnliche Verbrauchsparameter (z.B. Wasserverbrauch bei Waschmaschinen und Geschirrspülern) angezeigt wird. Zusätzlich werden in einigen Fällen auch zusätzliche statistische Größen wie z.B. ein durchschnittlicher Verbrauch, eine Änderung des Verbrauchs über einen definierten Zeitraum, etc. am Gerät oder online angezeigt. Mit dieser Information soll es dem Nutzer ermöglicht werden, sein Verbrauchsverhalten im Bezug auf die Nachhaltigkeit einzuschätzen und ggf. gezielt anzupassen.

Der hier vorgestellte Ansatz stellt sich die Aufgabe, ein verbessertes Verfahren und eine verbesserte Vorrichtung zum Darstellen eines Energieverbrauchs eines Kleingeräts, ein verbessertes Kleingerät und eine verbesserte Transmittervorrichtung zu schaffen.

Erfindungsgemäß wird diese Aufgabe durch ein Verfahren und eine Vorrichtung zum Darstellen eines Energieverbrauchs eines Kleingeräts, ein Kleingerät und eine Transmittervorrichtung mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen in einer kostengünstig zu realisierenden Darstellungsmethode für einen Energieverbrauch eines drahtlos mit Energie versorgten Geräts.

Ein Verfahren zum Darstellen eines Energieverbrauchs eines unter Verwendung einer Transmittervorrichtung drahtlos mit Energie versorgbaren Kleingeräts umfasst die folgenden Schritte:
Einlesen eines Verbrauchsignals, das einen Anforderungswert für eine von dem Kleingerät für eine Nutzungsvorgang prognostizierte Energie und/oder einen von einer Messeinrichtung der Transmittervorrichtung gemessenen Übertragungswert für eine während des Nutzungsvorgangs an das Kleingerät übertragenen Energie repräsentiert; und
Bereitstellen eines Anzeigesignals an eine Schnittstelle zu einer Anzeigeeinrichtung unter Verwendung des Verbrauchsignals, um einem Nutzer einen Energieverbrauch des Kleingeräts für den Nutzungsvorgang darzustellen.

Unter einem Kleingerät kann ein elektrischer Verbraucher verstanden werden, beispielsweise ein Mixer oder ein Toaster. Wenn das Kleingerät auf einer Ladezone der Transmittervorrichtung abgestellt ist, kann das Kleingerät mittels induktiver Kopplung von der Transmittervorrichtung drahtlos mit zum Betreiben des Kleingeräts erforderlicher Energie versorgt werden. Die Transmittervorrichtung kann auch als Transmitter und das Kleingerät kann als Receiver bezeichnet werden. Die Transmittervorrichtung kann beispielsweise als Kochfeld ausgeführt sein. In diesem Fall kann die Ladezone zusätzlich als Kochstelle verwendet werden. Alternativ kann die Transmittervorrichtung auch nur eine zum Betreiben eines Kleingeräts vorgesehene Ladezone umfassen. Zum Übertragen von Energie kann die Transmittervorrichtung eine sendeseitige Spule zum Generieren eines magnetischen Wechselfelds und das Kleingerät eine empfangsseitige Spule zum Empfangen des magnetischen Wechselfelds umfassen. Die Ladezone kann dabei zum Laden und/oder Betreiben des Kleingerätes genutzt werden.

Das erfindungsgemäße Darstellen für den Nutzungsvorgang kann eine Darstellung eines aktuell während des Nutzungsvorgangs vorliegenden Energieverbrauchs umfassen. Der Energieverbrauch bezieht sich hier explizit auf den aktuellen Nutzungsvorgang. Alternativ oder ergänzend kann die Darstellung für den Nutzungsvorgang eine Darstellung eines während des Nutzungsvorgangs akkumulierten Energieverbrauchs das Nutzungsvorgangs für einen aktuellen und/oder zukünftigen Zeitpunkt umfassen.

Im Betrieb des Kleingeräts kann die für einen Nutzungsvorgang erforderliche Energie unter Verwendung der Spulen in Richtung des Kleingeräts übertragen werden. Unter einem Nutzungsvorgang kann eine Funktion, beispielsweise ein Programm zum Zubereiten von Speisen, verstanden werden. Eine dafür erforderliche Energie kann durch das Kleingerät prognostiziert werden. Der Anforderungswert kann eine Energiemenge kennzeichnen, die voraussichtlich zum Durchführen des Nutzungsvorgangs erforderlich ist. Somit kann der Anforderungswert eine Energiemenge angeben, ohne dass eine Messung erforderlich ist. Der Übertragungswert kann dagegen eine messtechnisch erfasste Energiemenge definieren. Vorteilhafterweise kann der Übertragungswert auf Seiten der Transmittervorrichtung bestimmt werden, ohne dass eine Messeinrichtung in den Kleingerät erforderlich ist. Das Verbrauchsignal kann sich aus mehreren Teilsignalen zusammensetzen, beispielsweise um den Anforderungswert und den Übertragungswert separat übertragen zu können. Je nach Ausführungsform kann der Schritt des Einlesens des Verbrauchsignals auf Seiten des Kleingeräts oder der Transmittervorrichtung erfolgen. Im Schritt des Bereitstellens kann der Energieverbrauch für den Nutzungsvorgang basierend auf dem Anforderungswert und zusätzlich oder alternativ basierend auf den Übertragungswert bestimmt und mittels des Anzeigesignals übertragen werden. Die Anzeigeeinrichtung kann beispielweise als ein Display oder ein Lautsprecher oder als ein mittels einer Datenverbindung verbundenes weiteres Gerät ausgeführt sein. Mittels der Anzeigeeinrichtung kann der Energieverbrauch beispielsweise grafisch oder akustisch angezeigt werden.

Das Verfahren kann einen Schritt des Bestimmens des Anforderungswerts unter Verwendung einer Steuereinheit des Kleingeräts umfassen. Beispielsweise kann der Anforderungswert unter Verwendung gespeicherter Verbrauchsdaten für vorangegangene Nutzungsvorgänge berechnet werden. Je nach Ausführungsform kann der Anforderungswert innerhalb der Steuereinheit weiterverarbeitet werden, sodass der Schritt des Einlesens durch die Steuereinheit ausgeführt werden kann. Alternativ kann der Anforderungswert ausgegeben werden, beispielsweise um über eine Schnittstelle drahtlos zu der Transmittervorrichtung übertragen zu werden.

Die Schritte des Bestimmens und Einlesens können während des Nutzungsvorgangs wiederholt ausgeführt werden. Dies kann insbesondere für länger andauernde Nutzungsvorgänge vorteilhaft sein, für die eine Abschätzung des Energiebedarfs im Voraus schwierig ist. Durch ein wiederholtes Ausführen der Schritte kann eine Reihe von Anforderungswerten bestimmt werden und dementsprechend eine Reihe von Verbrauchsignalen eingelesen werden. Durch die Reihe von Verbrauchsignalen kann der komplette Energiebedarf während der kompletten Zeitdauer des Nutzungsvorgangs abgebildet werden. Im Schritt des Bereitstellens kann das Anzeigesignal unter Verwendung der Reihe von Verbrauchsignalen bereitgestellt werden. Auf diese Weise kann der Energieverbrauch auch für lang andauernde Nutzungsvorgänge oder für Nutzungsvorgänge bestimmt werden, bei denen ein Nutzer beispielsweise eine Programmänderung vornimmt.

Das Verfahren kann einen Schritt des Anzeigens des Energieverbrauchs unter Verwendung des Anzeigesignals umfassen. Gemäß einer Ausführungsform wird der Energieverbrauch mittels einer Anzeigeeinrichtung des Kleingeräts angezeigt. Auf diese Weise kann der Vorgang des Bestimmens und Anzeigens des Energieverbrauchs für einen Nutzungsvorgang des Kleingeräts ausschließlich unter Verwendung von Einrichtungen des Kleingeräts durchgeführt werden.

Gemäß einer Ausführungsform kann das Verbrauchsignal im Schritt des Einlesens über eine Schnittstelle einer Steuereinrichtung der Transmittervorrichtung eingelesen werden. Dazu können das Kleingerät und die Transmittervorrichtung eine Schnittstelle zur drahtlosen Datenübertragung aufweisen. Beispielsweise können das Kleingerät und die Transmittervorrichtung dazu jeweils eine Kommunikationsspule aufweisen. Insbesondere kann dabei der Anforderungswert unter Verwendung des Verbrauchsignals von dem Kleingerät zu der Transmittervorrichtung übertragen werden. Optional kann der Anforderungswert auch zum Steuern einer Bereitstellung von Energie von der Transmittervorrichtung zu dem Kleingerät genutzt werden.

Optional kann das Verbrauchsignal eine Identifikation des Kleingeräts umfassen. Auf diese Weise kann der von dem Kleingerät an die Transmittervorrichtung übertragene Anforderungswert auf Seiten der Transmittervorrichtung dem Kleingerät zugeordnet werden. Beispielsweise kann das Anzeigesignal neben einer Information über den Energieverbrauch auch eine Information über die Identifikation des Kleingerätes umfassen. Dies ermöglicht es, die Anzeige für den Nutzer so zu gestalten, dass es für den Nutzer ersichtlich ist, für welches Kleingerät der Energieverbrauch angezeigt wird.

Entsprechend kann das Verfahren einen Schritt des Anzeigens des Energieverbrauchs unter Verwendung des Anzeigesignals mittels einer Anzeigeeinrichtung der Transmittervorrichtung oder eines mobilen Geräts umfassen. Dies ist beispielsweise vorteilhaft, wenn das Kleingerät keine Anzeigeeinrichtung aufweist.

Der Anforderungswert und der Übertragungswert können geeignete physikalische Größen, beispielsweise einen Wert für eine elektrische Leistung, eine elektrische Stromstärke, eine elektrische Spannung und zusätzlich oder alternativ einen Wert für eine Zeitdauer einer Bereitstellung von Energie darstellen. Somit kann der beschriebene Ansatz beispielsweise an die technischen Ausführungen unterschiedlicher Kleingeräte angepasst werden

Das Verfahren kann einen Schritt des Bestimmens eines Verlustsignals umfassen, das einen Verlust der während des Nutzungsvorgangs von der Transmittervorrichtung an das Kleingerät übertragenen Energie repräsentiert. Im Schritt des Bereitstellens kann das Anzeigesignal unter Verwendung des Verlustsignals bereitgestellt werden. Dies ist vorteilhaft, wenn eine Verlustleistung einen erheblichen Anteil einer von der Transmittervorrichtung benötigten Leistung einnimmt.

Das Verfahren kann einen Schritt des drahtlosen Übertragens der Energie an das Kleingerät umfassen. Das Übertragen kann während einer Dauer des Nutzungsvorgangs unter Verwendung der Transmittervorrichtung durchgeführt werden. Dies ermöglicht einen Betrieb des Kleingeräts während des Nutzungsvorgangs.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Je nach Ausführungsform kann die Vorrichtung beispielweise als eine Steuereinheit des Kleingeräts oder als eine Steuereinheit der Transmittervorrichtung ausgeführt sein oder verteilt realisiert sein, beispielsweise sowohl in einer Steuereinheit des Kleingeräte als auch in einer Steuereinheit der Transmittervorrichtung.

Dementsprechend kann ein Kleingerät mit einer entsprechenden Vorrichtung ausgeführt sein oder es kann eine Transmittervorrichtung mit einer entsprechenden Vorrichtung ausgeführt sein. Gemäß einer Ausführungsform umfasst ein Gerätesystem sowohl die Transmittervorrichtung als auch zumindest ein genanntes Kleingerät, wobei die Vorrichtung entweder in der Transmittervorrichtung oder in dem zumindest einem der Kleingeräte angeordnet ist oder verteilt auf die Transmittervorrichtung und zumindest eines der Kleingeräte realisiert ist.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Auch wenn der beschriebene Ansatz anhand eines Haushaltgeräts beschrieben wird, kann der hier beschriebene Ansatz entsprechend im Zusammenhang mit einem gewerblichen oder professionellen Gerät eingesetzt werden.

Ein Ausführungsbeispiel der Erfindung ist in den Zeichnungen rein schematisch dargestellt und wird nachfolgend näher beschrieben. Es zeigt
- Figur 1: eine Darstellung eines Ausführungsbeispiels einer Transmittervorrichtung und eines Kleingeräts;
- Figur 2: ein Ablaufdiagramm eines Ausführungsbeispiels eines Verfahrens zum Darstellen eines Energieverbrauchs;
- Figur 3: eine schematische Darstellung eines Ausführungsbeispiels einer Vorrichtung zum Darstellen eines Energieverbrauchs; und
- Figur 4: ein Ablaufdiagramm eines Ausführungsbeispiels eines Verfahrens zum Darstellen eines Energieverbrauchs.

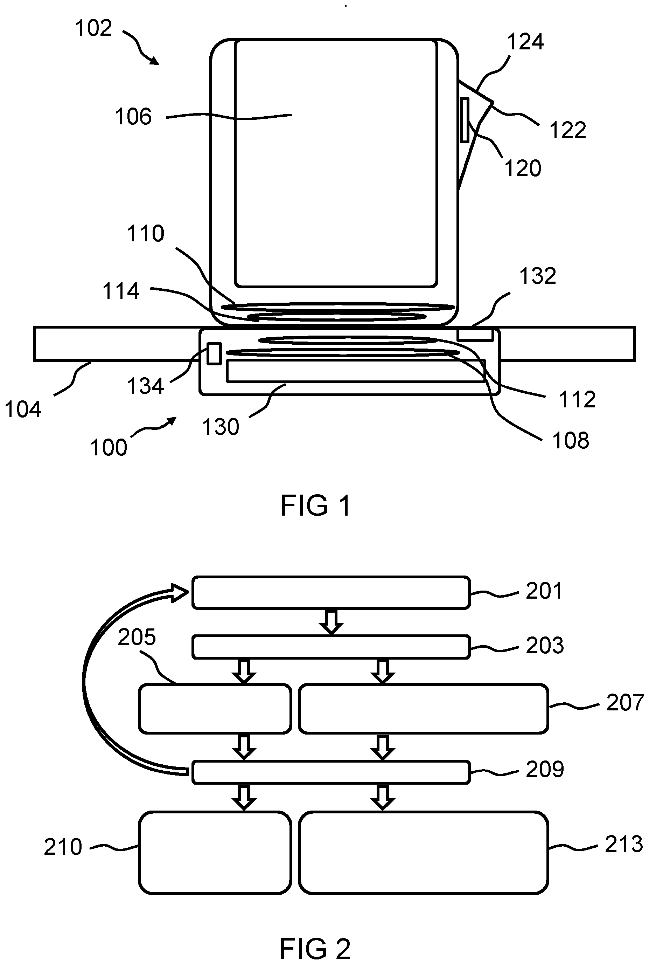

Figur 1 zeigt eine Darstellung eines Ausführungsbeispiels einer Transmittervorrichtung 100 und eines Kleingeräts 102. Beispielhaft ist die Transmittervorrichtung 100 als ein Kochfeld ausgeführt, das in eine Arbeitsplatte 104 integriert ist. Die Transmittervorrichtung 100 weist zumindest eine Ladezone auf, auf die das Kleingerät 102 abgestellt werden kann. Optional ist die Ladezone auch als Kochstelle verwendbar, beispielsweise zum Erhitzen eines Kochtopfes. Das Kleingerät 102 ist beispielsweise als ein einen Lebensmittelbehandlungsraum 106 umfassendes Lebensmittelbehandlungsgerät ausgeführt, beispielsweise als ein Wasserkocher oder ein Mixer.

Gemäß einem Ausführungsbeispiel weist das Kleingerät 102 keinen Netzanschluss und keine eigene autarke Energiequelle auf, sondern wird von der Transmittervorrichtung 100 mit Energie versorgt.

Dazu weist die Transmittervorrichtung 100 eine sendeseitige Energieübertragungsspule 108 und das Kleingerät 102 eine empfangsseitige Energieübertragungsspule 110 auf. Die sendeseitige Energieübertragungsspule 108 ist ausgebildet, um ein magnetisches Wechselfeld zu erzeugen, über das Energie von der Transmittervorrichtung 100 zu dem Kleingerät 102 übertragen werden kann. Die empfangsseitige Energieübertragungsspule 110 ist ausgebildet, um unter Verwendung des magnetischen Wechselfelds elektrische Energie bereitzustellen, die zum Betrieb des Kleingeräts 102 verwendet werden kann. Beispielsweise umfasst das Kleingerät 102 einen Elektromotor und zusätzlich oder alternativ einen Heizwiderstand, die unter Verwendung der elektrischen Energie betrieben werden können.

Beispielsweise wird bei einem Nutzungsvorgang des Kleingeräts 102 zum Zubereiten von Lebensmitteln der Elektromotor für eine vorbestimmte Zeitdauer mit einer bestimmten Drehzahl betrieben und der Heizwiderstand für die vorbestimmte Zeitdauer auf eine bestimmte Temperatur erhitzt. Gemäß einem Ausführungsbeispiel ist das Kleingerät 102 ausgebildet, um die für einen solchen Nutzungsvorgang erforderliche Energie zu prognostizieren, die von der Transmittervorrichtung 100 bereitzustellen ist.

Optional weisen die Transmittervorrichtung 100 und das Kleingerät 102 eine Kommunikationsschnittstelle zur Datenübertragung auf. Dazu weist die Transmittervorrichtung 100 beispielsweise eine erste Kommunikationsspule 112 und das Kleingerät 102 eine zweite Kommunikationsspule 114 auf. Die Kommunikationsschnittstelle wird beispielsweise verwendet, um eine Energieübertragung an das Kleingerät 102 anzufordern und optional ein Verbrauchsignal an die Transmittervorrichtung 100 zu übertragen, dass einen zur Durchführung eines Nutzungsvorgangs prognostizierten Energiebedarf des Kleingeräts 102 anzeigt sowie optional eine Identifikation des Kleingeräts 102 an die Transmittervorrichtung 100 zu übertragen.

In einem Beispiel entspricht die Transmittervorrichtung 100 einer ersten Funktionseinheit, also einem Energiesender, und das Kleingerät 102 einem Energieempfänger. Die Transmittervorrichtung 100 und das Kleingerät 102 weisen jeweils eine Induktionsspule, hier die Energieübertragungsspulen 108, 110 zur Energieübertragung bzw. zum Energieempfang und optional eine zusätzliche Kommunikationsschnittstelle, beispielsweise mit sogenannten Near Field Communication (NFC) Spulen, hier den Kommunikationsspulen 112, 114, zur Kommunikation zwischen Sender und Empfänger auf.

Die Transmittervorrichtung 100 kann dabei gemäß unterschiedlicher Ausführungsbeispiele für sich stehen, Teil eines Kochfelds oder einer Kochzone eines Kochfelds sein oder versteckt unter der Arbeitsplatte 104 montiert werden.

Gemäß einem Ausführungsbeispiel umfasst das Kleingerät 102 eine Steuereinheit 120, beispielweise in Form einer Elektronikeinheit, optional eine Bedieneinheit 122 und optional eine Anzeigeeinrichtung 124. Beispielweise kann die Einheit 102 von einem Nutzer bedient werden, um einen auszuführenden Nutzungsvorgang auszuwählen, der dann gesteuert durch die Elektronikeinheit 120 ausgeführt werden kann. Die Anzeigeeinrichtung 120 kann beispielsweise verwendet werden, um den ausgewählten Nutzungsvorgang anzuzeigen.

Gemäß einem Ausführungsbeispiel umfasst die Transmittervorrichtung 100 eine Steuereinrichtung 130, beispielsweise in Form einer Elektronikeinheit, und optional eine Bedieneinheit und optional eine Anzeigeeinheit, wobei die Anzeigeeinrichtung und die Bedieneinheit gemäß einem Ausführungsbeispiel als kombinierte Bedien- und Anzeigeeinheit 132 ausgeführt sind. Optional umfasst die Transmittervorrichtung 100 eine Messeinrichtung 134, die ausgebildet ist, um einen Wert von an das Kleingerät 102 übertragener Energie, also beispielsweise eine übertragene Energiemenge, zu erfassen und einen entsprechenden Übertragungswert bereitzustellen.

Gemäß einem Ausführungsbeispiel ist die Steuereinheit 120 des Kleingeräts 102 ausgebildet, um ansprechend auf eine Auswahl eines durchzuführenden Nutzungsvorgangs eine zum Durchführen des Nutzungsvorgangs erforderliche Energiemenge zu prognostizieren. Eine entsprechende prognostizierte die Energiemenge wird von der Steuereinheit 120 oder alternativ von der Steuereinrichtung 130 der Transmittervorrichtung 100 verwendet, um einen für die Durchführung des Nutzungsvorgangs angefallenen Energieverbrauch zu bestimmen und eine Darstellung des angefallenen Energieverbrauchs zu ermöglichen, beispielsweise indem ein den Energieverbrauch darstellendes Anzeigesignal an die Anzeigeeinrichtung 124 des Kleingeräts oder die Anzeigeeinrichtung 132 der Transmittervorrichtung 100 bereitgestellt wird. Zusätzlich oder alternativ ist die Steuereinrichtung 130 ausgebildet, um den für die Durchführung des Nutzungsvorgangs angefallenen Energieverbrauch unter Verwendung eines von der Messeinrichtung 130 während der Durchführung des Nutzungsvorgangs erfassten Übertragungswerts zu bestimmen und eine Darstellung des angefallenen Energieverbrauchs über eine der Anzeigeeinrichtungen 124, 132 zu ermöglichen. Die Anzeigeeinrichtungen 124, 132 sind dabei nur beispielhaft genannt. Es kann beispielsweise auch eine externe Anzeigeeinrichtung eines mobilen Geräts, beispielsweise eines Smartphones, verwendet werden.

Gemäß einem bevorzugten Ausführungsbeispiel kann einem Nutzer damit nach einem Nutzungsvorgang des Kleingeräts 102 der angefallene Energieverbrauch dargestellt werden.

Für diese Funktion ist es nicht notwendig, dass das Kleingerät 102 die aufgenommene Leistung misst. Stattdessen wird eine Möglichkeit beschrieben, wie diese Funktion bei dem drahtlos mit Energie versorgten Kleingerät 102, insbesondere einem Küchenkleingerät, wie z.B. Mixer oder Toaster, aber ggf. auch einem anderen induktiv mit Energie versorgten Gerät, wie z.B. Laptop, Tablet, Kopfhörer, Smart-Glass oder Smartphone, ohne Zusatzkosten für eine Messmöglichkeit realisiert werden kann.

Vorteilhafterweise lässt sich der Energieverbrauch bei dem Kleingerät 102 auch dann ohne zusätzliche Sensorik zur Messung des Verbrauchs bestimmen, wenn das Kleingeräte 102 nicht bekannte veränderliche Verbrauchsdaten aufweist, wie es beispielsweise bei einem Betrieb eines 1000W-Heizkörpers bei variabler Spannung für einen Zeitraum x oder bei einem Motor mit veränderlichen Verbrauchsdaten der Fall ist.

Gemäß einem Ausführungsbeispiel ist das Kleingerät 102 ohne ein Display ausgeführt, auf dem die Ergebnisse einer Eco-Feedback- Funktion angezeigt werden könnten. Optional ist auch keine Vernetzung vorhanden. Für einen solchen Fall wird gemäß einem Ausführungsbeispiel auf die Anzeigeeinrichtung 132 der Transmittervorrichtung 100 zurückgegriffen. Somit fallen keine Zusatzkosten für Sensorik und/oder Vernetzungshardware und/oder Bedienschnittstellen an.

Wenn die Transmittervorrichtung 100 in den beschriebenen Ansatz einbezogen wird, ist es zudem möglich, übergreifenden Auswertungen zu erstellen, die beispielsweise weitere Kleingeräte mit einbeziehen, die im Zusammenhang mit der Transmittervorrichtung 100 betrieben werden.

Gemäß dem hier beschriebenen Ansatz wird es gemäß einem Ausführungsbeispiel ermöglicht, ohne zusätzliche Hardware den Energieverbrauch von drahtlos mit Energie versorgten Kleingeräten, wie dem Kleingerät 102, zu erheben und/oder auszuwerten.

Dazu erfolgt gemäß einem Ausführungsbeispiel eine Nutzung der auch ohne zusätzliche Messhardware vorhandenen Daten aus der Kommunikation zwischen dem Kleingerät 102, das auch als Receiver bezeichnet wird, und der Transmittervorrichtung 100, die beispielsweise als Kochfeld ausgeführt ist und auch als Transceiver bezeichnet wird, bzw. eine Nutzung der im Zusammenhang damit erhobenen Daten für die Erhebung und/oder Auswertung des Energieverbrauchs des Kleingeräts 102. Im Zusammenhang kann dabei z. B. bedeuten, dass eine Elektronikeinheit, beispielsweise die Steuereinheit 120, in dem Kleingerät 102 den Energiebedarf des Kleingeräts 102 erhebt und/oder prognostiziert, um diese Energiewerte und/oder eine damit verbundene Größe an eine die Energie induktiv bereitstellende Einheit (Transceiver), hier an die Transmittervorrichtung 100, zu übermitteln. Es ist nicht notwendig, dass die Daten direkt aus der Kommunikation zwischen dem Kleingerät 102, das auch als Energie-empfangendes Gerät bezeichnet wird, und Transmittervorrichtung 100, das auch als Energie-bereitstellendes Gerät bezeichnet wird, gewonnen werden.

Gemäß einem Ausführungsbeispiel ist eine entsprechende Funktion in dem Kleingerät 102 realisiert. Dazu speichert das Kleingerät 102 die vom Kleingerät 102 bei der Transmittervorrichtung 100 angeforderte Leistung und verarbeitet diese weiter. Eine Anzeige der Ergebnisse erfolgt beispielsweise in einer Benutzerschnittstelle des Kleingeräts 102 und/oder mittels einer damit verbundenen Datenverarbeitungseinheit, z.B. einer App oder einem Clouddienst. Gemäß einem Ausführungsbeispiel ist dafür eine geeignete Benutzerschnittstelle am Kleingerät 102 und zusätzlich oder alternativ eine Vernetzung des Kleingeräts 102 vorgesehen. Vorteilhafterweise ist dabei keine Zusatzhardware für die Messung der aufgenommenen Leistung im Kleingerät 102 notwendig.

Gemäß einem Ausführungsbeispiel ist eine entsprechende Funktion für beliebige Kleingeräte in der Transmittervorrichtung 100 realisiert. Dazu speichert die Transmittervorrichtung 100 die vom Kleingerät 102 bei der Transmittervorrichtung 100 angeforderte Leistung und verarbeitet diese weiter.

Das Kleingerät 102 wird dabei optional mittels den bei der Kommunikation zwischen den Geräten anfallenden Daten identifiziert bzw. eindeutig erkennbar gemacht, z.B. mittels einer bei der Kommunikation übertragenen Identifizierung, beispielweise in Form einer Geräte-ID. So können die Daten einem speziellen Gerät zugeordnet werden. Dies ermöglicht einen Vergleich verschiedener Geräte bzw. eine Verfolgung der Verbrauchsdaten von Kleingeräten über einen längeren Zeitraum.

Optional wird anstelle von oder zusätzlich zur angeforderten Leistung auch die aus Messungen in der Transmittervorrichtung 100, z.B. in einem Induktionsgenerator, bekannte übertragene Leistung bzw. damit verbundene Messgrößen gespeichert und weiterverwendet. Solche Messdaten liegen in der Transmittervorrichtung 100 üblicherweise vor, ohne dass dafür zusätzliche Messhardware eingebaut werden müsste.

Gemäß einem Ausführungsbeispiel erfolgt eine Anzeige der Ergebnisse in einer Benutzerschnittstelle der Transmittervorrichtung 100 und/oder mittels einer damit verbundenen Datenverarbeitungseinheit, z.B. einer App oder einem Clouddienst.

Vorteilhafterweist ist dafür keine Zusatzhardware für die Messung der aufgenommenen Leistung im Kleingerät 102 notwendig. Zusätzlich ist keine zusätzliche Funktion in einer Steuerelektronik des Kleingeräts 102 notwendig und es ist auch keine Anzeige der Information in der Benutzerschnittstelle des Kleingeräts 102 notwendig. Zudem ist keine Kommunikation des Kleingeräts 102 mit einer App oder einer Cloud notwendig. Damit ist dieser Ansatz auch für sehr einfache Kleingeräte, wie z.B. Saftpressen oder Mixer nutzbar.

Gemäß einem Ausführungsbeispiel ist eine Vergleichbarkeit der Daten verschiedener Kleingeräte unabhängig vom Hersteller der Kleingeräte möglich, da Messung und Auswertung der Daten in der Transmittervorrichtung 100 oder einer damit verbundenen Datenverarbeitungseinheit, z.B. einer App oder einem Clouddienst, stattfindet.

Gemäß einem Ausführungsbeispiel werden anstelle der Leistung auch damit verbundene Größen, wie z.B. die Stromstärke gespeichert und/oder verarbeitet.

Gemäß einem Ausführungsbeispiel werden Verluste, welche bei der Übertragung der Energie zwischen der Transmittervorrichtung 100 und den Kleingerät 102 auftreten, optional berücksichtigt.

Gemäß einem Ausführungsbeispiel werden Verbrauchswerte verschiedener Kleingeräte und/oder anderer beispielsweise an einem Kochprozess beteiligter Kochgeräte, wie z.B. Backöfen und Kochfelder, für eine übergreifende Auswertung des Energieverbrauchs eines Kochvorgangs, z.B. Zubereitung eines ganzen Menüs zusammengeführt.

Auch in bekannten Standards für das drahtlose Laden von Smartphones, etc. wird eine drahtlose Energieübertragung mit einem ähnlichen Verfahren beschrieben. Auch in diesen Fällen ist ein Monitoring des Energieverbrauchs der drahtlos geladenen Mobilgeräte mit dem gleichen Ansatz möglich.

Vorteilhafterweise ergibt sich bei dem hier beschriebenen Ansatz eine Kosteneinsparung durch Verzicht auf zusätzliche Hardware und es ist optional eine Nutzung von vorhandenen Bedienschnittstellen und/oder Vernetzungsoptionen beispielsweise von Kochfeldern möglich.

Figur 2 zeigt ein Ablaufdiagramm eines Ausführungsbeispiels eines Verfahrens zum Darstellen eines Energieverbrauchs, beispielweise des anhand von Figur 1 beschriebenen Kleingeräts.

In einem Schritt 201 erfolgt eine Bestimmung des Leistungsbedarfs für den Nutzungsvorgang des Kleingeräts, beispielsweise durch die Steuerelektronik des Kleingeräts. In einem Schritt 203 erfolgt eine Anforderung der im Schritt 201 bestimmten Leistung bei dem Transmitter, beispielsweise der anhand von Figur 1 beschriebenen Transmittervorrichtung. In einem Schritt 205 erfolgt eine Bereitstellung der Leistung durch den Transmitter. Optional erfolgt zeitlich parallel dazu in einem Schritt 207 eine Erfassung der abgerufenen Leistung durch eine Elektronik des Transmitters und/oder einer damit verbundenen Datenverarbeitungseinrichtung. In einem Schritt 209 wird überprüft, ob der Nutzungsvorgang des Kleingeräts beendet ist. Wenn dies nicht der Fall ist, wird zu dem Schritt 201 zurückgesprungen und es werden die Schritte 201, 203, 205, 207, 209 erneut ausgeführt. Wenn der Nutzungsvorgang des Kleingeräts dagegen beendet ist, erfolgt anschließend an den Schritt 209 in einem Schritt 211 eine Beendigung der Leistungsbereitstellung durch den Transmitter. Ferner erfolgt in einem Schritt 213 eine Anzeige der im letzten Nutzungsvorgang verbrauchten Leistung durch eine Benutzerschnittstelle des Transmitters und/oder eine damit verbundene Datenverarbeitung- bzw. Anzeigeeinrichtung.

Optional kann ein Zwischenstand des Energieverbrauchs auch schon während des Betriebs des Geräts angezeigt und optional laufend und/oder getriggert durch definierte Ereignisse und/oder in definiertem zeitlichen Takt aktualisiert werden.

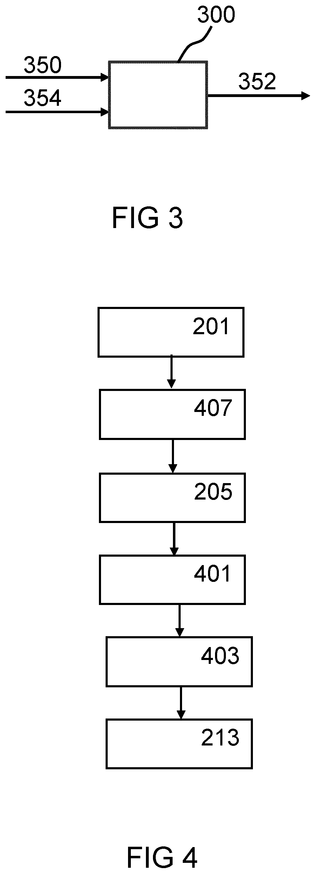

Figur 3 zeigt eine schematische Darstellung eines Ausführungsbeispiels einer Vorrichtung 300 zum Darstellen eines Energieverbrauchs eines Kleingeräts, beispielsweise des anhand von Figur 1 gezeigten Kleingeräts.

Die Vorrichtung 300 ist ausgebildet um ein Verbrauchsignal 350 einzulesen und unter Verwendung des Verbrauchsignals 350 ein Anzeigesignal 352 zu bestimmen und bereitzustellen.

Gemäß einem Ausführungsbeispiel wird das Verbrauchsignal 350 von einer Steuereinheit des Kleingeräts bestimmt und von einer Vorrichtung 300 innerhalb der Steuereinheit eingelesen. Gemäß einem alternativen Ausführungsbeispiel wird das Verbrauchsignal 350 über eine Schnittstelle zwischen dem Kleingerät und der Transmittervorrichtung übertragen und von einer Steuereinrichtung der Transmittervorrichtung eingelesen. Gemäß einem Ausführungsbeispiel wird das Verbrauchsignal 350 von einer Messeinrichtung der Transmittervorrichtung bestimmt und von der Steuereinrichtung der Transmittervorrichtung eingelesen.

Gemäß einem Ausführungsbeispiel wird unter Verwendung des Verbrauchsignals 350 ein Anforderungswert übertragen, der eine von dem Kleingerät für einen Nutzungsvorgang prognostizierte und/oder angeforderte Energie repräsentiert. Zusätzlich oder alternativ wird unter Verwendung des Verbrauchsignals 350 ein Übertragungswert übertragen, der eine während des Nutzungsvorgangs an das Kleingerät übertragene Energie repräsentiert.

Gemäß einem Ausführungsbeispiel ist die Vorrichtung 300 ausgebildet um unter Verwendung des Anforderungswerts und zusätzlich oder alternativ unter Verwendung des Übertragungswerts einen Energieverbrauch des Kleingeräts zu bestimmen, der von dem Kleingerät zur Durchführung des Nutzungsvorgangs verbraucht wird. Die Vorrichtung 300 ist gemäß einem Ausführungsbeispiel ausgebildet, um das Anzeigesignal 352 an eine Schnittstelle zu einer Anzeigeeinrichtung bereit zu stellen, wobei das Anzeigesignal 352 ausgebildet ist, um die Anzeigeeinrichtung so anzusteuern, dass der Energieverbrauch für einen Nutzer ersichtlich dargestellt wird.

Wenn ein Verlust bestimmt wird, der für die Übertragung der Energie an das Kleingeräts anfällt ist die Vorrichtung 300 optional ausgebildet um ein den Verlust repräsentierendes Verbrauchsignal 354 einzulesen und zum Bestimmen des Anzeigesignals 352 zu verwenden. Ein entsprechender Verlust tritt beispielsweise aufgrund eines elektrischen Widerstands und einer damit einhergehenden Erwärmung der Energieübertragungsspulen auf.

Je nach Ausführungsbeispiel können einzelne Funktionalitäten der Vorrichtung 300 in der Steuereinheit des Kleingeräts und/oder in der Steuereinrichtung der Transmittervorrichtung und/oder in einer Cloud oder beispielsweise einem mobilen Gerät realisiert sein.

Figur 4 zeigt ein Ablaufdiagramm eines Ausführungsbeispiels eines Verfahrens zum Darstellen eines Energieverbrauchs eines unter Verwendung einer Transmittervorrichtung drahtlos mit Energie versorgbaren Kleingeräts, beispielsweise des anhand von Figur 1 beschriebenen Kleingeräts.

In einem Schritt 401 wird zunächst ein Verbrauchsignal eingelesen. Gemäß unterschiedlicher Ausführungsbeispiele repräsentiert das Verbrauchsignal einen Anforderungswert für eine von dem Kleingerät für einen Nutzungsvorgang prognostizierte Energie und zusätzlich oder alternativ einen von einer Messeinrichtung der Transmittervorrichtung gemessenen Übertragungswert für eine während des Nutzungsvorgangs an das Kleingerät übertragenen Energie. In einem Schritt 403 wird basierend auf dem Verbrauchsignal ein Anzeigesignal bestimmt und an eine Schnittstelle zu einer Anzeigeeinrichtung bereitgestellt. Das Anzeigesignal ist geeignet, um die Anzeigeeinrichtung so anzusteuern, dass einem Nutzer ein Energieverbrauch des Kleingeräts für den Nutzungsvorgang dargestellt wird.

Optional wird die für den Nutzungsvorgang voraussichtlich erforderliche Energie und damit der Anforderungswert in einem Schritt 201 bestimmt. Dabei erfolgt eine entsprechende Bestimmung beispielsweise unter Verwendung einer Steuereinheit des Kleingeräts.

Die Schritte 201, 401 werden optional während einer Fortdauer des Nutzungsvorgangs fortlaufend wiederholt um eine Reihe von Anforderungswerten zu bestimmen und dementsprechend eine Reihe von Verbrauchsignalen einzulesen. In diesem Fall wird das Anzeigesignal unter Verwendung der Reihe von Verbrauchsignalen bestimmt und bereitgestellt. Jeder Anforderungswert der Reihe von Anforderungswerten repräsentiert dabei beispielsweise einen prognostizierten Energiebedarf für einen Teilabschnitt des Nutzungsvorgangs.

Optional wird zusätzlich in einem Schritt 407 ein Verlustsignal bestimmt, das einen Verlust der während des Nutzungsvorgangs von der Transmittervorrichtung an das Kleingerät übertragenden Energie repräsentiert. Gemäß einem Ausführungsbeispiel wird im Schritt 403 der Verlust in die Bestimmung des Energieverbrauchs und die Bereitstellung des Anzeigesignals einbezogen.

Gemäß einem Ausführungsbeispiel umfasst das Verfahren optional einen Schritt 205 in dem die für den Nutzungsvorgang erforderliche Energie drahtlos an das Kleingerät übertragen wird.

Optional umfasst das Verfahren einen Schritt 213, in dem das Anzeigesignal verwendet wird, um den Energieverbrauch unter Verwendung einer Anzeigeeinrichtung anzuzeigen. Dabei handelt es sich beispielsweise um eine Anzeigeeinrichtung des Kleingeräts und/oder der Transmittervorrichtung und/oder eines externen Geräts, beispielsweise eines mobilen Geräts.

Optional kann die Anzeige des Anzeigesignals auch zeitverzögert erfolgen. Zu diesem Zweck kann das Signal optional zwischengespeichert und zu einem späteren Zeitpunkt abgerufen und angezeigt werden. Der Vorgang des Speicherns kann auf dem Kleingerät und/oder auf der Transmittervorrichtung und/oder an einer damit verbundenen Einrichtung wie beispielsweise einem Cloud-Speicher und/oder einem Mobilgerät erfolgen.

## Patentansprüche

1. Verfahren zum Darstellen eines Energieverbrauchs eines unter Verwendung einer Transmittervorrichtung (100) drahtlos mit Energie versorgbaren Kleingeräts (102), wobei das Verfahren die folgenden Schritte umfasst:
Einlesen (401) eines Verbrauchsignals (350), das einen Anforderungswert für eine von dem Kleingerät (102) für einen Nutzungsvorgang prognostizierte Energie und/oder einen von einer Messeinrichtung (134) der Transmittervorrichtung (100) gemessenen Übertragungswert für eine während des Nutzungsvorgangs an das Kleingerät (102) übertragenen Energie repräsentiert; und
Bereitstellen (403) eines Anzeigesignals (352) an eine Schnittstelle zu einer Anzeigeeinrichtung (124, 132) unter Verwendung des Verbrauchsignals (350), um einem Nutzer einen Energieverbrauch des Kleingeräts (102) für den Nutzungsvorgang darzustellen.

2. Verfahren gemäß Anspruch 1, mit einem Schritt (201) des Bestimmens des Anforderungswerts unter Verwendung einer Steuereinheit (120) des Kleingeräts (102).

3. Verfahren gemäß Anspruch 2, mit einem Wiederholen der Schritte (201; 401) des Bestimmens und Einlesens während des Nutzungsvorgangs um eine Reihe von Anforderungswerten zu bestimmen und eine Reihe von Verbrauchsignalen (350) einzulesen, wobei im Schritt (403) des Bereitstellens das Anzeigesignal (352) unter Verwendung der Reihe von Verbrauchsignalen (350) bereitgestellt wird.

4. Verfahren gemäß einem der vorangegangenen Ansprüche, mit einem Schritt (213) des Anzeigens des Energieverbrauchs unter Verwendung des Anzeigesignals (352) mittels der Anzeigeeinrichtung (124) des Kleingeräts (102) und/oder mittels der Anzeigeeinrichtung (132) der Transmittervorrichtung (100) oder mittels eines mobilen Geräts.

5. Verfahren gemäß einem der vorangegangenen Ansprüche, bei dem das Verbrauchsignal (350) im Schritt (401) des Einlesens über eine Schnittstelle einer Steuereinrichtung (130) der Transmittervorrichtung (100) eingelesen wird.

6. Verfahren gemäß einem der vorangegangenen Ansprüche, bei dem das Verbrauchsignal (350) eine Identifikation des Kleingeräts (102) umfasst.

7. Verfahren gemäß einem der vorangegangenen Ansprüche, bei dem der Anforderungswert und/oder der Übertragungswert einen Wert für eine elektrische Leistung und/oder eine elektrische Stromstärke definieren.

8. Verfahren gemäß einem der vorangegangenen Ansprüche, mit einem Schritt (407) Bestimmens eines Verlustsignals (354), das einen Verlust der während des Nutzungsvorgangs von der Transmittervorrichtung (100) an das Kleingerät (102) übertragenden Energie repräsentiert, wobei im Schritt (403) des Bereitstellens das Anzeigesignal (352) unter Verwendung des Verlustsignals (354) bereitgestellt wird.

9. Verfahren gemäß einem der vorangegangenen Ansprüche, mit einem Schritt (205) des Übertragens der Energie drahtlos an das Kleingerät (102) während des Nutzungsvorgangs unter Verwendung der Transmittervorrichtung (100).

10. Vorrichtung (300), die ausgebildet ist, um die Schritte des Verfahrens gemäß einem der vorangegangenen Ansprüche in entsprechenden Einheiten auszuführen und/oder anzusteuern.

11. Computer-Programmprodukt mit Programmcode zur Durchführung des Verfahrens nach einem der Ansprüche 1 bis 9, wenn das Computer-Programmprodukt auf einer Vorrichtung (300) gemäß Anspruch 10 ausgeführt wird.

12. Kleingerät (102) und/oder Transmittervorrichtung (100) mit einer Vorrichtung (300) gemäß Anspruch 10.

13. Kleingerät (102) gemäß Anspruch 12, das eine empfangsseitige Energieübertragungsspule (110) zum Empfangen drahtlos übertragener Energie aufweist.

14. Transmittervorrichtung (100) gemäß Anspruch 12, insbesondere Kochfeld, wobei die Transmittervorrichtung (100) eine sendeseitige Energieübertragungsspule (108) zum drahtlosen Aussenden von Energie aufweist.
